# EUROPEAN PATENT APPLICATION

(11) **EP 2 498 538 A1**
(43) Date of publication of application: **12.09.2012**
(21) Application number: 11405233.5
(22) Date of filing: 11.03.2011
(51) Int. Cl.: H04W 36/00

(54) **Mobile communication device**

(71) Applicant: Rayzon Technologies AG, 3007 Bern (CH)
(72) Inventor: Dr. Danzeisen, Marc, 3063 Ittigen (CH)
(74) Representative: Rentsch Partner AG

(57) **Abstract**

The invention relates to a mobile communication device (1) and to a method for configuring such a mobile communication device (1), comprising:
a) communication stacks (2, 3), service stacks (4, 5), and applications (701, 702, 703), wherein a communication stack (2, 3) includes communication modules (101, 102, 201, 202, 301, 302, 300HO, 401, 402) arranged in multiple communication layers (I. ... IV.) of the mobile communication device (1), wherein a service stack (4, 5) includes service modules (103, 104, 303, 401, 402) arranged in multiple layers (I.... IV.) of the mobile communication device (1);
b) multiple plugins (10 ... 80) having a message interface (11 ... 81) designed for interaction with a message channel (90) for transmitting messages to other plugins (10 ... 80);
c) wherein plugins (10 ... 80) are configured to read data from communication modules, from service modules, and/or from applications of the mobile communication device (1) and to send a corresponding message through its message interface (11 ... 81) for transmission on the message channel (90); and
d) wherein plugins (10 ... 80) are configured to conditionally receive and process a message from the message channel (90) through its message interface (11 ... 81), wherein a corresponding message is sent through the message interface (11 ... 81) of the plugin for transmission on the message channel (90) and/or wherein data is written to communication modules, to service modules, and/or to applications of the mobile communication device (1).

## Description

### Technical Field

The invention relates to a mobile communication device and a method for configuring a mobile communication device.

### Background Art

Mobile communication is widely available and constantly growing. Depending on the built in communication interfaces and the availability of mobile networks, mobile communication devices like a mobile telephone have the capability to connect to various networks, for example to a GSM network (GSM: Global System for Mobile Communications, Groupe Spécial Mobile), to a UMTS/EDGE network (UMTS: Universal Mobile Telecommunications System, EDGE: Enhanced Data Rates for GSM Evolution), or to a Wi-Fi network.

Communication devices are constructed according to communication models, for example according to the OSI model (OSI: Open Systems Interconnection, ISO/IEC standard 7498) or according to the TCP/IP model (TCP: Transmission Control Protocol, IP: Internet Protocol, RFC 1122), wherein communication layers are defined providing the functionalities needed to operate the communication device. In case of the OSI model, 7 communication layers are defined, namely the Physical Layer (Layer 1), the Data Link Layer (Layer 2), the Network Layer (Layer 3), the Transport Layer (Layer 4), the Session Layer (Layer 5), the Presentation Layer (Layer 6), and the Application Layer (Layer 7). In case of the TCP/IP model, only 4 communication layers are defined, namely the Link Layer, the Internet Layer, the Transport Layer, and the Application Layer. Often, a communication interface includes Layer 1 and Layer 2, wherein the communication layers above interact with the communication interface in order to provide communication services. Layer 1 and 2 concern modules provided by a manufacturer of a communication interface, whereas layer 3 is part of the operating system. In the context of the present invention, the term "communication stack" is defined to include a communication interface as well as optionally one or more modules included in higher communication layers.

In both the OSI model and the TCP/IP model, each communication layer comprises one or more entities which implement certain functionalities. Each layer interacts directly only with the layer beneath it, and provides facilities for use by the layer above it, except layer I., which does not have a layer beneath it and layer VII. which does not have a layer above it. Accordingly, an application in the Application Layer is not involved in the reliable transmission of data or in decisions relating to routing of data to other communication devices, for example. Such functionalities are provided by one or more of the other layers below the application layer.

Management of communication devices is essential for an efficient communication and various protocols have been developed accordingly. CMIP (Common Management Information Protocol) is a protocol for network management. It provides services defined by the CMIS (Common Management Information Service), allowing communication between network management applications and management agents. CMIP/CMIS is emerged out of the ISO/OSI Network management model and is defined by the ITU-T X.700 series of recommendations. A more popular design is SNMP (Simple Network Management Protocol) of the IETF (Internet Engineering Task Force).

In typical SNMP use, one or more administrative computers (managers) have the task of monitoring or managing a group of hosts. Each managed system executes, at all times, a software component (agent) which reports information via SNMP to the manager. A managed node that implements the SNMP interface allows unidirectional or bidirectional access to node-specific information. SNMP operates in the Application Layer.

Contrary to SNMP and CMIS/CMIP, which are designed for management of several network nodes, the present invention is directed to optimal configuration of a mobile communication device in order to provide optimized communication services.

In current mobile communication devices, activation and configuration of communication interfaces depend on the availability of communication networks. Accordingly, if a mobile communication device is moved to a new location in the range of a first and a second mobile communication network, for example, quality of service of a first mobile network may be compared to quality of service of a second network. Depending on the capabilities of the communication device, selection and connection to the mobile communication network with the better quality of service may occur automatically. Widely known is the connection to a Wi-Fi network - if such network is available - and the connection to a UMTS network otherwise. In other cases, a Bluetooth ad-hoc connection between a mobile communication device and a portable computer may be established automatically, for example when a user wants to exchange data like photos or audio files between the mobile communication device and the computer.

Automatic connection to an available network occurs by usual interaction of communication layers according to the OSI model or the TCP/IP model. Hence, connection to the network is established from a bottom layer to a top layer, namely from the physical layer to the application layer, wherein for each layer a required configuration is established and only then interaction to the layer above it is activated. As soon as configuration of all layers is established, data communication to network resources is provided to applications in the application layer.

Current mobile communication devices have the drawback that activation and configuration of communication interfaces is based on the availability or on the quality of service of communication networks. Moreover, activation and configuration of communication layers of the communication requires a relatively long time, because each layer has to be configured on its own before a layer above may be informed to take necessary configuration steps. Each layer is configured by itself. Additionally, if several communication interfaces are available for activation and configuration, status and current configuration information has to propagate through all layers, such that an application or the communication interfaces among themselves may decide about an optimal activation and configuration of the communication interfaces.

### Summary of the invention

It is the object of the invention to create a mobile communication device and a method for configuring a mobile communication device pertaining to the technical field initially mentioned that are able to base activation and/or configuration of communication stacks on any available information, wherein an optimal configuration of the communication stacks is provided in order to provide optimal communication services.

The solution of the invention is specified by the features of claim 1. According to the invention, the mobile communication device comprises:
a) one or more communication stacks, one or more service stacks, and one or more applications, wherein a communication stack includes one or more communication modules arranged in multiple communication layers of the mobile communication device, wherein a service stack includes one or more service modules arranged in multiple layers of the mobile communication device;
b) multiple plugins, each plugin having a message interface designed for interaction with a message channel for transmitting one or more messages from the plugin to other plugins;
c) wherein one or more of the multiple plugins are configured to read data from one or more communication modules, from one or more service modules, and/or from one ore more applications of the mobile communication device and to send a corresponding message through its message interface for transmission on the message channel; and
d) wherein one or more of the multiple plugins are configured to conditionally receive and process a message from the message channel through its message interface, wherein a corresponding message is sent through the message interface of the plugin for transmission on the message channel and/or wherein data is written to one or more communication modules, to one or more service modules, and/or to one or more applications of the mobile communication device.

The service stacks may collect any information relevant for the mobile communication device, for example position, inclination, or neighbourhood of the mobile communication device, the fuel or battery status of a vehicle transporting the mobile communication device, location and distance to other mobile communication devices, user information of the mobile communication device, or any other information. Plugins are configured to read data from the communication modules, such as for example if a network connection is established or quality of service of an established connection, and to read data from the service modules relating to the collected data. Using the message channel, the plugins distribute the data read among them. Hence, one plugin may send the message that a network connection with communication stack is established. Another plugin may send the message that the vehicle is currently not moving. Both of these messages are received and processed by a further plugin, which may be arranged to thereafter configure an application such that for example data comprising pictures recently acquired by the application are sent through the network connection to a remote device.

A plugin may be designed not only to read or write data to a module of the communication device, it may also be designed to call or start functions and methods implemented in the module.

Particularly, the mobile communication device may be installed in a vehicle designed for object observation. Any equipment may be installed in the vehicle, for example video or audio equipment in order to observe a certain object. Such equipment may be installed in the object itself and ad-hoc communication devices may be designed to provide a data communication channel between the equipment and the mobile communication device. Accordingly, some applications in the mobile communication device are designed to collect and possibly store audio and/or video data relating to the observation of the object. One or more of the communication stacks of the mobile communication device may be designed to transmit collected data through a communication network to a remote device for further analysis and processing.

In a preferred embodiment, one or more plugins are arranged such that reading and/or writing of data from/to a communication module, from/to a service module, and/or from/to an application occurs by direct access to a module or application of the mobile communication device.

In order to improve speed and versatility, the plugins interact directly with an appropriate communication module in a communication layer of the mobile communication device. Namely, the plugin does not only interact with standard APIs (API: Application Programming Interface), which is provided to an upper layer for access. Such APIs often provide too little information or functions, according to the general idea of communication layers to abstract information. For example, a bit error rate of physical layer may be accessible only within the physical layer or a layer just above it. Hence, the plugin has direct access to such information. Therefore, a plugin engages in a deeper manner with the communication modules, namely at a location where all information and functions is accessible. This occurs of course contrary to the definition of communication layers and breaches the principle idea behind layered communication models. There exist communication modules which provide further APIs (standardized or not standardized, but not thought to be accessible by an upper layer) which enable a comprehensive access to internal information and functions, for example in a debug mode. SNMP can be considered to be such a standardised access. On a communication device which has included an SNMP access, the routing table of the IP module of Network Layer 3 may be read out, for example. Even in case information would be available through the application layer, passing the information through all layers up to the application layer is a slower operation than direct access to the appropriate layer for gaining the needed information. Moreover, providing optimal communication services is enabled, because configuration of the communication device is based on detailed information about the current status of the communication device, for example about the position of the mobile communication device and therefore the distance to base stations, such that communication parameters like communication energy may be optimally configured. In another example, information about the inclination of a vehicle comprising the communication device may be used, such that antenna drive motors may be actived in order to optimally rotate or move antennas with respect to ground.

Preferably one or more plugins are arranged such that data read from a communication module, from a service module, and/or from an application includes positional data of the mobile communication device, in particular data relating to an inclination and/or the geographic position of the mobile communication device.

Such plugins may transmit messages to the message channel containing information about the current position of the mobile communication device. Further plugins may be arranged to receive these messages, to compare the position with a geographic data map and to transmit further messages indicating the distance of the mobile communication to a next basis station of a communication network, indicating if the mobile communication device is within a town and surrounded by high buildings or if the mobile communication device is in a rural area and surrounded by little obstacles. A further plugin may receive and also process these messages and transmit, for example, messages including recommendations with respect to radio signal power of a communication stack, orientation of adjustable antennas, or any other recommendation relating to the configuration of communication stacks. The plugins with a direct access to communication modules may be arranged to receive and process messages containing such recommendations, and to configure respective communication stacks accordingly.

In a preferred embodiment, one or more plugins are arranged to read status data of a communication module, status data of a service module and/or status data of an application of the mobile communication device.

The plugins may be arranged to send messages depending on the data read. For example, status data of a communication module may include information about current load or congestion of a network. Accordingly, the plugin may generate messages indicating such events, such that any other plugin connected to the message channel may take appropriate measures. For example, in case of network congestion, further communication stacks in the mobile communication device may be activated. Service modules may collect information about a battery or fuel status of a vehicle. Accordingly, the plugin may be arranged to send corresponding messages onto the message channel, wherein further plugins may be arranged to receive and process the messages, such that, for example, in case of low battery or fuel priority of applications to send data through a network may be changed and important data like recent video or picture data may be delivered immediately to remote devices. Status data of an application of the mobile communication device may include user data indicating personal preferences or the role of a user in an observation or combat team. If a team leader is working on the mobile communication device, the plugins may be arranged to offer larger communication capacities for receiving data from remote devices, such that the team leader constantly has all available data instantly available. On the other hand, if a person observing an object is working on the mobile communication device, the plugins may be arranged to offer larger communication capacities for transmitting data to remote devices, such that all observation results are instantly available to remote devices.

In a preferred embodiment, a hand-over module is arranged in one or more of the communication layers of the mobile communication device in order to provide for data communication using one or more communication stacks of the mobile communication device.

The hand-over module may be designed to run autonomously or it may be connected to a plugin, such that configuration or adaption of the hand-over module may be controlled by the plugin. Again, various scenarios are feasible. For example, a plugin directly connected to a communication module detects an increased error rate in the physical layer. Accordingly, a message is generated and transmitted to the message channel in order to announce the new information. A plugin connected to the hand-over module may receive and process the message containing the information about the increased error rate and configure the hand-over module accordingly, for example to decrease or stop sending data to the communication stack with the increased error rate.

Preferably, a supervisor-module is arranged in order to collect status information of the multiple plugins and/or corresponding module and to initiate correction and/or restart of a plugin and/or corresponding module in case a malfunction is detected.

Collection of status information may include status information of communication modules, service modules or any other modules of the mobile communication device corresponding to the plugin. Accordingly, restart may include restart of the corresponding module. The modules of the mobile communication device may be realized by software modules at various stages of their developments. Accordingly, some modules of the mobile communication device are already in a stable stage, whereas other modules are less stable. In principle, as the modules do not depend on each other, the mobile communication device may work properly also in case a module has stopped to work or is in a malfunction. However, depending on the information gathered by the plugin, the mobile communication device may operate in a less optimal mode and proper function of the modules is desirable at all time. Accordingly, the supervisor module may request at regular time intervals status information from plugins and/or corresponding modules. The status information may be sent automatically by the plugin and/or corresponding module or on request from the supervisor module. If the supervisor-module does not receive any status information, correction or restart of the plugin and/or corresponding module may be initiated. Restart may include a kill command of a process belonging to the malfunction or stopped plugin/module and an execute command of the software belonging to the plugin/module.

In a preferred embodiment, one or more communication stack includes an Ethernet interface, a WiFi interface (WiFi Alliance), a GSM interface (GSM: Global System for Mobile Communications, Groupe Spécial Mobile) and/or an UMTS/EDGE interface (UMTS: Universal Mobile Telecommunications System, EDGE: Enhanced Data Rates for GSM Evolution).

Any other technology may be employed, particularly in the future when new communication standards become available. The communication stacks may be designed to work in an infrastructure mode or in an ad-hoc mode. In an infrastructure mode, the mobile communication device may be connected through a communication network to remote devices. In an ad-hoc mode, the mobile communication device may be dynamically connected to devices in the range of the communication technology involved. The communication stacks are based on widely available standards and therefore provide robust and cost efficient communication facilities.

Preferably, one or more application includes a SIP Client (SIP: Session Initiation Protocol), a visualization tool, an instant messaging tool, an administration console, an audio conferencing server, a map server, a fault-tolerant instant messaging server, an image upload server, and/or a distributed file system server.

Any other server or service may be included in one or more applications of the mobile communication device. As the applications include various services and tools, the mobile communication device is arranged for use in various environments.

For each of the servers or services, a corresponding plugin may be provided in order to provide appropriate functionalities for optimizing the communication services of the mobile communication device.

In a preferred embodiment, additional modules are arranged in one or more communication layer of the mobile communication device, in particular a local info module, a scenario info module, a plugins configuration module, a stream monitor module, an instinct module, a topology module, a hand-over module, a multicasting module, a network monitor module, and/or an ad-hoc network configuration module.

Any other module may be included in the mobile communication device. The modules provide heterogenous network-related services to all applications running on the mobile communication device. Such modules may include the following types of modules: server, service, applications, tools.

A method for configuring a mobile communication device comprises the steps:
a) activating one or more communication stacks, one or more service stacks, and one or more applications, wherein a communication stack includes one or more communication modules arranged in multiple communication layers of the mobile communication device, wherein a service stack includes one or more service modules arranged in multiple layers of the mobile communication device;
b) activating multiple plugins, each plugin having a message interface designed for interaction with a message channel for transmitting one or more messages from the plugin to other plugins;
c) activating one or more of the multiple plugins configured to read data from one or more communication modules, from one or more service modules, and/or from one or more applications of the mobile communication device and to send a corresponding message through its message interface for transmission on the message channel; and
d) activating one or more of the multiple plugins configured to conditionally receive and process a message from the message channel through its message interface, wherein a corresponding message is sent through the message interface of the plugin for transmission on the message channel and/or wherein data is written to one or more communication modules, to one or more service modules, and/or to one or more applications of the mobile communication device.

As soon as the communication stacks, the service stacks and the plugins are activated, the mobile communication device operates in a versatile mode providing heterogenous network-related services to all applications of the mobile communication device.

In a preferred embodiment, one or more plugins are activated such that reading and/or writing of data from/to a communication module, from/to a service module, and/or from/to an application occurs by direct access to a module or application of the mobile communication device.

Accordingly, heterogenous information related to the operation of the mobile communication device is collected rapidly and various information may be taken into account in order to provide optimal communication services to the mobile communication device.

Preferably, one or more plugins are activated such that data read from a communication module, from a service module, and/or from an application includes positional data of the mobile communication device, in particular data relating to an inclination and/or the geographic position of the mobile communication device.

The current position or inclination of the mobile communication device may be taken into account by various plugins in order to optimally adjust operation of the communication stacks and/or the service stacks.

In a preferred embodiment, one or more plugins are activated to read status data of a communication module, status data of a service module and/or status data of an application of the mobile communication device.

Because any heterogenous information relating to the mobile communication device is taken into account, its operation can be optimized and further improved.

Preferably, a hand-over module is activated in one or more of the communication layers other than the application layer in order to provide for data communication using one or more communication stacks of the mobile communication device.

The hand-over module enables communication of one or more application through multiple communication stacks. As soon as the communication device is moved to a different location, the hand-over module may decide to route data of applications through different communication interfaces. Accordingly, the mobile communication device is operated in an optimized and robust manner.

Other advantageous embodiments and combinations of features come out from the detailed description below and the totality of the claims.

### Brief description of the drawing

The drawing used to explain the embodiments shows:

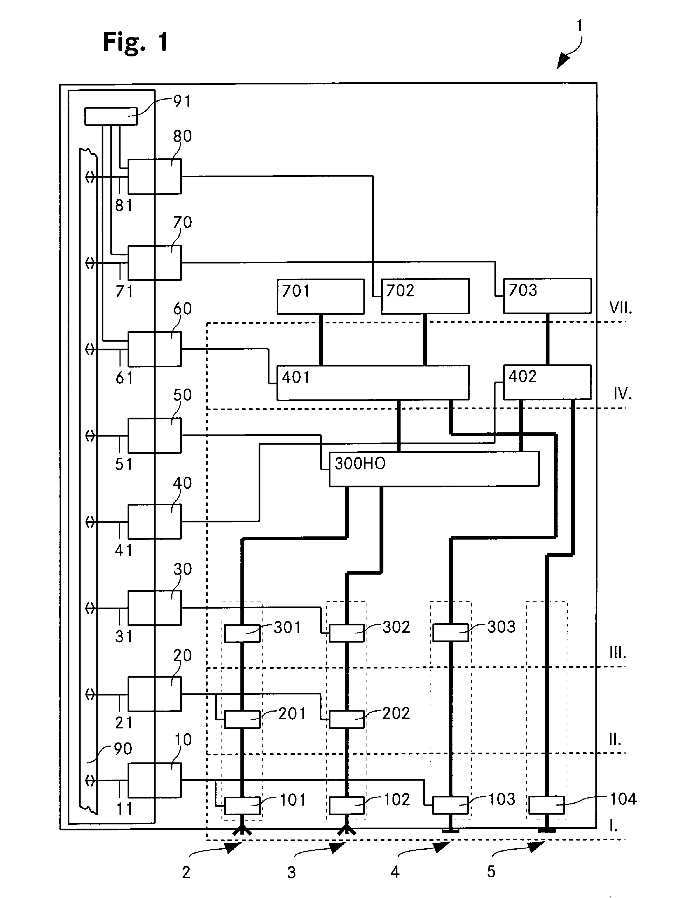

- Fig. 1: schematically a mobile communication device according to the invention.

In the figures, the same components are given the same reference symbols.

### Preferred embodiments

Fig. 1 shows schematically a mobile communication device 1 according to the invention. The mobile communication device 1 is subdivided into communication layers I. ... VII., for example as defined by the OSI model (OSI: Open Systems Interconnection, ISO/IEC standard 7498) or by the TCP/IP model (TCP: Transmission Control Protocol, IP: Internet Protocol, RFC 1122). In case of the OSI model, 7 communication layers are defined, namely the Physical Layer (Layer 1), the Data Link Layer (Layer 2), the Network Layer (Layer 3), the Transport Layer (Layer 4), the Session Layer (Layer 5), the Presentation Layer (Layer 6), and the Application Layer (Layer 7). In case of the TCP/IP model, only 4 communication layers are defined, namely the Link Layer, the Internet Layer, the Transport Layer, and the Application Layer.

In Fig. 1, communication layers I., II., III., IV., and VII. are shown explicitly. Layer I. may correspond to the Physical Layer of the OSI model. Layer VII. may correspond to the Application Layer of the OSI model. In case of the OSI model, additional communication layers V. and VI. are located between communication layer IV. and VII. In the TCP/IP model, Layer I. and II. are merged into the Link Layer and Layers V., VI., and VII. are merged into the Application Layer. Layer III. corresponds to the Network Layer, whereas Layer IV. corresponds to the Transport Layer.

The mobile communication device 1 according to Fig. 1 comprises one or more communication stacks 2, 3. The communication stacks 2, 3 may include any physical media, as, for example, an Ethernet physical layer, a variety of the 802.11 Wi-Fi physical layer, a GSM radio interface physical layer, an UMTS/EDGE physical layer, or to any other physical layer. Correspondingly, the mobile communication device 1 comprises receptacles for plugs of a communication cable and/or antennas for receiving and transmitting signals. Consequently, the communication stack 2, 3 may include communication technologies like WLAN, WIMAX, GSM, GPRS, EDGE, UMTS, HSxPA, LTE, Bluetooth, ZigBee, UWB or any other communication technology (WLAN: Wireless Local Area Network, WIMAX: Worldwide Interoperability for Microwave Access, GPRS: General Packet Radio Service, HSxPA: High Speed Xlink Packet Access, LTE: Long Term Evolution, UWB: Ultra-Wideband Wireless). As shown schematically in Fig. 1, a communication stack 2, 3 may extend over multiple communication layers of the mobile communication device 1 and include multiple communication modules 101, 102, 201, 202, 301, 302, 300HO, 401, 402 of one or more communication layers I. ... IV. Among others, a communication stack 2, 3 may include a hand-over module 300HO, and/or one or more transport modules 401, 402. However, a communication stack 2, 3 may extend only over one communication layer of the mobile communication device 1.

The mobile communication device 1 further comprises one or more service stacks 4, 5. The service stacks 4, 5 may include a GPS stack (GPS: Global Positioning System), a stack for monitoring the charge state of an accumulator and/or the fuel level in a gasoline tank, a stack for determining the inclination or technical features like off-road capabilities of a vehicle, a stack including a gyro compass, a stack for monitoring physiological parameters like pulse, position, location, or mobility of a user, or any other service module. Consequently, the service stacks 4, 5 provide various information concerning the status and environment of the mobile communication device 1. As shown schematically in Fig. 1, the service stacks 4, 5 may extend over one or more layers of the mobile communication device 1. In general, the communication stacks 4, 5 may extend over any number of layers of the mobile communication device 1. Accordingly, a service stack 4, 5 may include one or more service modules 103, 104, 303, 401, 402 arranged in multiple communication layers I. ... IV. of the mobile communication device 1. Among others, the service stack 4, 5 may include one or more transport modules 401, 402.

According to an OSI model or a TCP/IP model, for example, one or more applications 701, 702, 703 running on the mobile communication device 1 interact with the communication stacks 2, 3 and the service stacks 4, 5. The applications 701, 702, 703 may include front-end applications, which are used directly by the end user (human operator) of the mobile communication device 1, or they may include back-end applications, which provide high-level services used by front-end applications or by external applications.

Among the front-end applications, a SIP client, a VisApp, a management tool or any other application may be included in the mobile communication device 1. A SIP client (SIP: Session Initiation Protocol) allows an end-user to take part in a common conference by connecting to an audio conferencing. A VisApp allows visualization and quick assess of the status of a network of several mobile communication devices 1, wherein a picture feed and a built-in messaging is included. A management tool may include a console allowing control of the current state of the mobile communication device 1 and configure its local behaviour.

Among the back-end applications an audio conferencing server, a map server, a SHOUT server, an image upload server, a dist FS, or any other server, service, application or tool may be included in the mobile communication device 1. An audio conferencing server, which is designed for example as an IP PBX (PBX: private branch exchange) capable to provide normal calls and conference calls, may provide connectivity for SIP-capable phones and software clients, allowing end-users to take part in a common conference. A map server may provide local maps for the VisApp so that GPS data can be displayed in a meaningful context. A SHOUT server may include a fault-tolerant instant messaging server designed to work in highly distributed and dynamic network environments. An image upload server may allow for on-the-fly upload of still pictures from a photo camera to the mobile communication device 1. A dist FS (FS: File System) may include a distributed file sharing service in order to share files and data between several mobile communication devices 1.

The mobile communication device 1 may include one or more modules 401, 402, 701, 702, 703, in particular transport layer modules 401, 402, a hand-over module 300HO, and/or any further module. For example, the transport layer modules 401, 402 may provide reliable data transfer services to the upper communication layers and may implement the TCP and/or the UDP protocol (TCP: Transmission Control Protocol, UDP: User Datagram Protocol). As another example, the hand-over module 300HO may provide routing over different communication stacks 2, 3. Moreover, any further modules may be included in the mobile communication device 1 in order to provide required functionalities and/or services.

The mobile communication device 1 includes several plugins 10 ... 80. The plugins 10 ... 80 are connected with message interfaces 11 ... 81 to a message channel 90, wherein each plugin 10 ... 80 is arranged to transmit messages to the message channel 90. The messages are transmitted to all other plugins 10 ... 80, wherein each plugin 10 ... 80 is arranged to conditionally receive the transmitted messages. For example, a first plugin 10 ... 80 may deliver messages to the message channel 90 using a certain topic identifier. Any other plugin 10 ... 80 may conditionally receive the delivered messages, for example, if the topic identifier matches certain criteria.

On the other hand, each plugin 10 ... 80 is directly connected to one or more communication modules 101, 102, 201, 202, 301, 302 of a communication stack 2, 3, a service stack 4, 5 and/or any other component contained in any of the communication layers of the mobile communication device 1, which enables a fast access to specific data as well as a fast storage of data. A plugin 10 ... 80 can be specifically designed to directly read and/or write data according to required design parameters of the mobile communication device 1. In case of a new technology, one ore more plugins 10 ... 80 can be easily upgraded or replaced by newly designed plugins 10 ... 80. If a plugin 10 ... 80 does not work properly or fails to work, the other plugins 10 ... 80 still continue to work, except that messages of the failed plugin 10 ... 80 are not available anymore. The remaining plugins 10 ... 80 may be appropriately designed to continue to run in case of missing messages. A lifecycle management system 91 may be arranged in order to request life beats from one or more of the plugins 10 ... 80 and to restart or reconfigure a plugin in case of a missing life beat from a plugin 10 ... 80.

The plugins 10 ... 80 may include the following functionalities and/or services:
- local info - a service for gathering state information about the mobile communication device 1 and making it locally available;
- scenario info - a service for distributing state information (i.e. local info) to all other nodes;
- plugins' configuration - a service for configuring all parts of the mobile communication device 1;
- stream monitor - a monitoring tool for listing active and desired network streams (e.g. TCP connections and/or UDP packet streams);
- instinct - a service responsible for deciding which network link should be used, based on the network status and/or application needs;
- topology - a service for gathering information about current quality of network links, deriving the current network topology and for making available this information to other plugins;
- multicasting - a multicasting service used by the mobile communication device 1 to share its status information with other mobile communication devices 1;
- network monitor - a monitoring tool for checking quality of network links and providing corresponding information to other plugins, in particular to the topology plugin;
- AODV - a lPv6-aware implementation of the AODV protocol (AODV: Ad-hoc On-demand Distance Vector);

A supervisor may be implemented as a container for running all plugins 10 ... 80 of the mobile communication device 1.

The plugins may be described according to the Topology-Plugin, LinkMon-Plugin, HO-Logic-Plugin, and HO-Plugin as follows:
Topology-Plugin: it establishes, based on topology relevant information, which are filtered from messages sent by other plugins, a mapping of a current network topology. Topology relevant information may include for example current neighbours of the communication stacks or routing tables of lPv4/v6 modules. For example, a IPv4 plugin may be configured such that a change in the routing table is instantly sent onto the message channel for delivery to other plugins.

LinkMon-Plugin/Module: the LinkMon (Link Monitoring) plugin checks one or more communication links with respect to availability and/or quality of service, for example. Actual values are sent by the LinkMon-Plugin through the message channel to other plugins by means of corresponding messages. For example a HO-Logic-Plugin can decide based on such data if a HO shall be performed.

HO-Logic-Plugin: the HO-Logic-Plugin is an example of a plugin which does not directly control a module of the mobile communication device. Instead, it just listens to messages (for example of the LinkMon-Plugin and/or the Topology-Plugin) and generates new messages for delivery on the messages channel, for example for the HO-Plugin which controls the HO-Module and performs the actual HO.

Moreover, plugins may be provided to control modules outside of the mobile communication device, for example a plugin to control a vehicle containing the mobile communication device in order to observe the fuel level and the battery level, to start the engine if more energy is required, for interaction with a navigation system, in order to instruct a driver of the vehicle to drive to a different location more suitable for communication.

The described stacks, interfaces, modules, plugins and other components may include any components providing the described functionalities, in particular, any hardware components and/or any software components capable to run on a microprocessor included in the mobile communication device 1. For example, the base system may include an operating system, like for example a Linux operating system, whereas the various modules may include software packages provided by different developers. The most notable components may include:
- TCP/IP stacks (v4 and v6) - which provide TCP/IP connectivity
- UpStart - which provide a life-cycle management for OS-level components;
- DBus - which provides a system-wide messaging channel;
- SyslogNG - which provides a unified logging facility;
- gpsd Daemon - which provides GPS readings;
- Ethernet card - one or more Ethernet cards for direct connectivity;
- Wi-Fi card - one or more Wi-Fi cards for wireless connectivity;
- UMTS modem - one or more UMTS modems;
- GPS/Galileo device - which provides access to the Global Positioning System and Galileo.

Each plugin 10 ... 80 represents or controls a communication module 101, 102, 201, 202, 301, 302, a service module 103, 104, 303, or any other module 300HO, 401, 402, 701, 702, 703 (i.e. a HO-module, a transport module, a server, a service, an application, a tool). Each module 101, 102, 201, 202, 301, 302, 103, 104, 303, 501, 401, 402, 701, 702, 703 may be respresented by one or more plugins 10 ... 80. For example in a OSI layer 3 model, a plugin may be provided for IPV4/6, multicast, AODV (AODV: Ad-hoc On-demand Distance Vector), OLSR (OLSR: optimized link stat routing). The same applies for Layer 4, in particular for UDP and TCP.

A HO module (HO: hand over) arranged in the mobile communication device 1 has to be regarded as an executive branch, wherein all decisions regarding the HO are performed by one or more of the plugins 10 ... 80, which take into account information provided by other plugins 10 ... 80. In case it is decided which application 701, 702, 703 shall us which communication stack 2, 3, a corresponding HO plugin performs a corresponding configuration of the HO modul.

HO can occur without a HO modul, for example directly in the application layer. A plugin may be designed to send configuration data to a particular application, wherein the data contains instructions to the application to perform a HO. For example the application may be instructed to us a new or different IP Socket (with a different IP address), which corresponds to a different communication stack 2, 3.

In summary, it is to be noted that a mobile communication device has been disclosed providing optimized and robust network-related services based on the collection of heterogenous information and based on a coordination of all involved components.

## Claims

1. Mobile communication device (1), comprising:
a) one or more communication stacks (2, 3), one or more service stacks (4, 5), and one or more applications (701, 702, 703), wherein a communication stack (2, 3) includes one or more communication modules (101, 102, 201, 202, 301, 302, 300HO, 401, 402) arranged in multiple communication layers (I. ... IV.) of the mobile communication device (1), wherein a service stack (4, 5) includes one or more service modules (103, 104, 303, 401, 402) arranged in multiple layers (I. ... IV.) of the mobile communication device (1);
b) multiple plugins (10 ... 80), each plugin (10 ... 80) having a message interface (11 ... 81) designed for interaction with a message channel (90) for transmitting one or more messages from the plugin (10 ... 80) to other plugins (10 ... 80);
c) wherein one or more of the multiple plugins (10 ... 80) are configured to read data from one or more communication modules (101, 102, 201, 202, 301, 302, 300HO, 401, 402), from one or more service modules (103, 104, 303), and/or from one or more applications (701, 702, 703) of the mobile communication device (1) and to send a corresponding message through its message interface (11 ... 81) for transmission on the message channel (90); and
d) wherein one or more of the multiple plugins (10 ... 80) are configured to conditionally receive and process a message from the message channel (90) through its message interface (11 ... 81), wherein a corresponding message is sent through the message interface (11 ... 81) of the plugin for transmission on the message channel (90) and/or wherein data is written to one or more communication modules (101, 102, 201, 202, 301, 302, 300HO, 401, 402) , to one or more service modules (103, 104, 303) and/or to one or more applications (701, 702, 703) of the mobile communication device (1).

2. Mobile communication device (1) according to claim 1, **characterized in that** one or more plugins (10 ... 80) are arranged such that reading and/or writing of data from/to a communication module (101, 102, 201, 202, 301, 302, 300HO, 401, 402) , from/to a service module (103, 104, 303, 401, 402), and/or from/to an application (701, 702, 703) occurs by direct access to a module of the mobile communication device (1).

3. Mobile communication device (1) according to claim 1 or 2, **characterized in that** one or more plugins (10 ... 80) are arranged such that data read from a communication module (101, 102, 201, 202, 301, 302, 300HO, 401, 402), from a service module (103, 104, 303, 401, 402), and/or from an application (701, 702, 703) includes positional data of the mobile communication device (1), in particular data relating to an inclination and/or the geographic position of the mobile communication device (1).

4. Mobile communication device (1) according to one of claims 1 to 3, **characterized in that** one or more plugins (10 ... 80) are arranged to read status data of a communication module (101, 102, 201, 202, 301, 302, 300HO, 401, 402), status data of a service module (103, 104, 303, 401, 402) and/or status data of an application (701 ... 703) of the mobile communication device (1).

5. Mobile communication device (1) according to one of claims 1 to 4, **characterized in that** a hand-over module (300HO) is arranged in one or more of the communication layers (I.... VII.) of the mobile communication device (1) in order to provide for data communication using one or more communication stacks (2, 3) of the mobile communication device (1).

6. Mobile communication device (1) according to one of claims 1 to 5, **characterized in that** a supervisor-module (91) is arranged in order to collect status information of the multiple plugins (10 ... 80) and/or corresponding module and to initiate correction and/or restart of a plugin (10 ... 80) and/or corresponding module in case a malfunction is detected.

7. Mobile communication device (1) according to one of claims 1 to 6, **characterized in that** one ore more the communication stack (2, 3) includes an Ethernet interface, a WiFi interface (WiFi Alliance), a GSM interface (GSM: Global System for Mobile Communications, Groupe Spécial Mobile) and/or an UMTS/EDGE interface (UMTS: Universal Mobile Telecommunications System, EDGE: Enhanced Data Rates for GSM Evolution).

8. Mobile communication device (1) according to one of claims 1 to 7, **characterized in that** one or more application (701, 702, 703) includes a SIP Client (SIP: Session Initiation Protocol), a visualization tool, an instant messaging tool, an administration console, an audio conferencing server, a map server, a fault-tolerant instant messaging server, an image upload server, and/or a distributed file system server.

9. Mobile communication device (1) according to one of claims 1 to 8, **characterized in that** additional modules (300HO, 401, 402, 701, 702, 703) are arranged in one or more communication layer (V.... VII.) of the mobile communication device (1), in particular a local info module, a scenario info module, a plugins configuration module, a stream monitor module, an instinct module, a topology module, a hand-over module, a multicasting module, a network monitor module, and/or an ad-hoc network configuration module.

10. Method for configuring a mobile communication device (1), comprising:
a) activating one or more communication stacks (2, 3), one or more service stacks (4, 5), and/or one or more applications (701, 702, 703), wherein a communication stack (2, 3) includes one or more communication modules (101, 102, 201, 202, 301, 302, 300HO, 401, 402) arranged in multiple communication layers (I.... III.) of the mobile communication device (1), wherein a service stack (4, 5) includes one or more service modules (103, 104, 303, 401, 402) arranged in multiple layers (I.... IV.) of the mobile communication device (1);
b) activating multiple plugins (10 ... 80), each plugin (10 ... 80) having a message interface (11 ...81) designed for interaction with a message channel (90) for transmitting one or more messages from the plugin (10 ... 80) to other plugins (10 ... 80);
c) activating one or more of the multiple plugins (10 ... 80) configured to read data from one or more communicationmodules (101, 102, 201, 202, 301, 302, 300HO, 401, 402), from one or more service modules (102, 104, 303, 401, 402), and/or from one or more applications (701, 702, 703) of the mobile communication device (1) and to send a corresponding message through its message interface (11 ... 81) for transmission on the message channel (90); and
d) activating one or more of the multiple plugins (10 ... 80) configured to conditionally receive and process a message from the message channel (90) through its message interface (11 ... 81), wherein a corresponding message is sent through the message interface (11 ... 81) of the plugin for transmission on the message channel (90) and/or wherein data is written to one or more communication modules (101, 102, 201, 202, 301, 302, 300HO, 401, 402), to one or more service modules (103, 104, 303, 401, 402), and/or to one or more applications (701, 702, 703) of the mobile communication device (1).

11. Method according to claim 10, **characterized in that** one or more plugins (10 ... 80) are activated such that reading and/or writing of data from/to a communication module (101, 102, 201, 202, 301, 302, 300HO, 401, 402), from/to a service module (103, 104, 303, 401, 402), and/or from /to an application (701, 702, 703) occurs by direct access to a module or application of the mobile communication device (1).

12. Method according to claim 10 or 11, **characterized in that** one or more plugins (10 ... 80) are activated such that data read from a communication module (101, 102, 201, 202, 301, 302, 300HO, 401, 402), from a service module (103, 104, 303, 401, 402), and/or from an application (701, 702, 703) includes positional data of the mobile communication device (1), in particular data relating to an inclination and/or the geographic position of the mobile communication device (1).

13. Method according to one of claims 10 to 12, **characterized in that** one or more plugins (10 ... 80) are activated to read status data of a communication module (101, 102, 201, 202, 301, 302, 300HO, 401, 402), status data of a service module (103, 104, 303, 401, 402) and/or status data of an application (701 ... 703) of the mobile communication device (1).

14. Method according to one of claims 10 to 13, **characterized in that** a hand-over module is activated in one or more of the communication layers (I. ... VII.) of the mobile communication device (1) in order to provide for data communication using one or more communication stacks (2, 3) of the mobile communication device (1).
